(19) Europäisches Patentamt
European Patent Office
Office européen des brevets

(11) Publication number: **0 348 238**
**A1**

(12) **EUROPEAN PATENT APPLICATION**

(21) Application number: 89306422.0

(22) Date of filing: 23.06.89

(51) Int. Cl.⁴: **F 26 B 9/08**
F 26 B 19/00, B 60 D 1/00

(30) Priority: 23.06.88 IE 1923/88   08.02.89 IE 409/89

(43) Date of publication of application:
27.12.89 Bulletin 89/52

(84) Designated Contracting States:
AT BE CH DE ES FR GB GR IT LI LU NL SE

(71) Applicant: **RANGEMORE SYSTEMS LIMITED**
**6 Lower Hatch Street**
**Dublin 2  (IE)**

(72) Inventor: **O'Farrell, Niall**
**The Bungalow Kilcummer Castletownroche**
**Mallow, County Cork  (IR)**

(74) Representative: **Lord, Hilton David et al**
**Marks & Clerk 57-60 Lincoln's Inn Fields**
**London WC2A 3LS  (GB)**

(54) **A dryer.**

(57) A dryer comprises a trailer body (10) having ground engaging wheels (11); a floor (12); two side walls (13, 14); a rear wall 15; and a front wall 16. The trailer body has a perforated floor (17) supported above the floor (12) to provide a cavity (30) in communication with an opening (23) in the wall (16). A dryer unit (40) may be mounted on a towbar adaptor (50) the hot air outlet of which dryer unit (40) is in communication with the cavity (30) via the opening (23). Particulate material placed in the trailer body (10) may be dried by the hot air from the dryer unit (40). The perforated floor (17) may be removable so that when absent, the trailer body (10) may be used as a conventional trailer body. Agitator means (94, 95) may be used to agitate the material during drying.

FIG.4

**Description**

## A DRYER

This invention relates to a dryer. In particular, it relates to a mobile dryer for use in drying grain, turf and other particulate material.

The present invention serves, inter alia, to provide a farmer, having a relatively small acreage of cereals in perhaps a mixed farming situation, with a relatively inexpensive mobile dryer when the relatively high cost of a specialised dryer would not be justified.

The invention, therefore, provides a dryer for grain, turf or other particulate material which dryer comprises a trailer body having ground engaging wheels, a floor, upstanding walls, and a perforated second floor, wherein the second floor is in parallel spaced-apart relationship relative to the floor and is adapted to support a load of particulate material above a cavity between the floor and the perforated floor; an air inlet means in the body for enabling air to be blown into the cavity from a dryer means; and means for attaching the body to a vehicle, such as a tractor, wherein the body may contain a load of particulate material which can be dried using the dryer means.

In one aspect, the present invention provides a trailer for drying loads charged therein, the trailer comprising a floor for supporting said loads, through which floor air can be forced, and means for forcing air for drying the loads up through the floor.

By 'trailer' is meant any suitable container moveable by a vehicle, and is preferably of the type which can be hitched to the back of a farm tractor. The invention also extends to self-powered trailers which can effectively be moved by hand, needing no other vehicle to move them, and to trailers which are, to all intents and purposes, part of a vehicle.

The floor through which air can be forced is preferably a false one above the bottom of the trailer, the resulting cavity being connected to an air inlet through which the air is forced. Alternatively, a system of pipes may be installed under the floor, false or real, and air forced through these.

The primary purpose of the floor is to permit the passage of air without letting too much. if any, of the drying load to pass downwards. This may be achieved by any suitable means and, in its simplest form, merely comprises perforating the floor. A further method comprises making holes in the floor, which may be large enough to permit passage of the load, and covering these holes with a mesh, such as chicken wire.

It is preferred that the trailers of the invention also be able to be used as normal trailers. Thus, it is preferred that the false floor be removeable, and the air inlet be closeable. Alternatively, it may be sufficient to cover the floor, false or otherwise, with a layer of protective material, such as a plastics sheet.

The drying means may be incorporated in the trailer, or in the towing vehicle, or may be free-standing. When free-standing, it may be coupled up as desired, such as by having it between vehicle and trailer as a link. It is possible to use the exhaust of the vehicle as dryer in some circumstances, although it will be apparent that this would not usually be preferable.

In order to obtain uniform drying of the load, it is preferable to have a means for redistributing or agitating the load. Many ways will be apparent to those skilled in the art. For example. a paddle could be set up to rotate through the load, although this may leave parts of the load untouched if the body of the trailer is not round. In a preferred embodiment, one or more paddles, or augers, are mounted on a cross-beam above the load, and, while the paddles move along the cross-beam, the cross-beam moves back and forth over the load.

Typical loads which can be dried by the trailers of the invention include grain crops, turf, cuttings such as grass cuttings and generally any load it is desired to dry.

The invention will be understood in greater detail from the following description of a preferred embodiment thereof given by way of example only and with reference to the accompanying drawings in which: -

Figure 1 is a perspective view of a dryer comprising a trailer body and dryer unit according to the invention;

Figure 2 is a perspective view of the trailer body and the dryer unit of Figure 1 of the drawings in an unhitched condition;

Figure 3 is a perspective rear view of the trailer body of Figure 1 of the drawings;

Figure 4 is a perspective view from above of the trailer body of Figure 1 of the drawings;

Figure 5 is a perspective view from above of the trailer body of Figure 1 of the drawings together with agitator means;

Figure 6 is a side elevation of the trailer body of Figure 5 of the drawings;

Figure 7 is a cut-away view of the trailer body of Figure 1 of the drawings;

Figure 7a, 7b and 7c are detailed views of part of the trailer body of Figure 7 of the drawings;

Figure 8 is plan view of a perforated floor for use in the trailer body of Figure 1 of the drawings;

Figure 9 is a perspective view of a tow-bar adaptor for use with the trailer body and the dryer unit of Figure 1 of the drawings and a tractor;

Figure 10 is a perspective view of part of an agitator means for use with the dryer of Figure 1 of the drawings;

Figure 11 is a perspective view of a second embodiment of an agitator means according to the invention;

Figure 12 is a perspective view of the agitator means of Figure 13 of the drawing mounted in tandem with a similar agitator means;

Figure 13 represents a first grid pattern for an auger of the agitator means;

Figure 14 represents a second grid pattern for an auger of the agitator means; and

Figure 15 is a perspective view of a tow-bar for use with the trailer body and dryer unit of Figure 1 of the drawings.

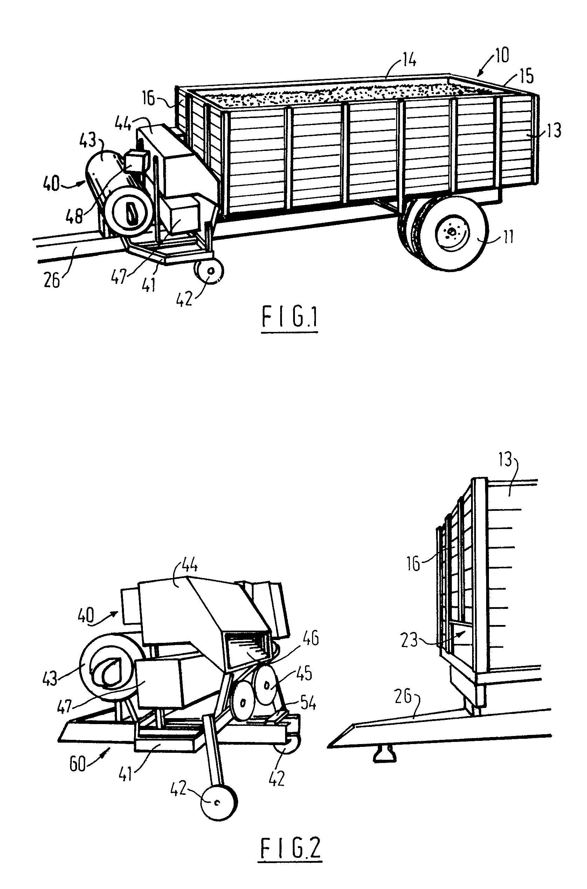

Referring now to the drawings and in particular to Figs. 1-10, there is shown a dryer according to the invention which comprises a trailer body 10 having ground enagaging wheels 11; a floor 12; two side walls 13, 14; a rear wall 15; and a front wall 16. The trailer body 10 also has a removable perforated floor 17 and optional agitator means generally shown as 22. For ease of removal, the perforated floor 17 comprises two floors 18, 19 mounted on respective frames 20, 21. The trailer body 10 may incorporate a lifting means (not shown) to enable the trailer 10 body to pivot about the axis of the ground enagaging wheels 11. Accordingly, the rear wall 15 is hinged at the top so that when the trailer body 10 is in the elevated condition, particulate matter therein can fall from the rear of the trailer body 10. The trailer body 10 has a tow-bar 26 having an eye 31.

The front wall 16 of the trailer body 10 has an opening 23. The opening 23 is located between the floor 12 and the perforated floor 17.

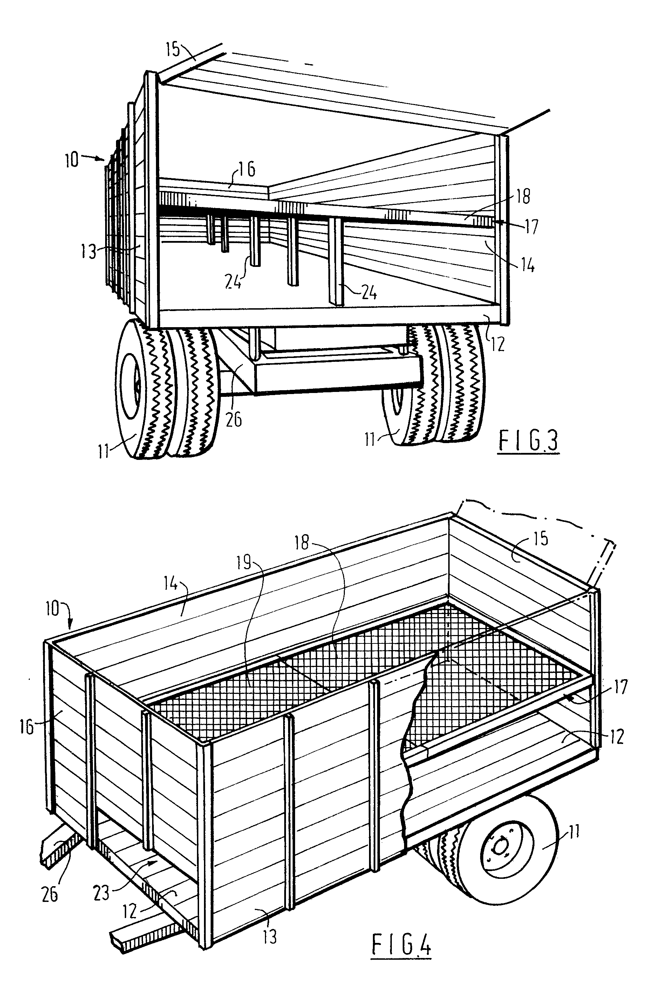

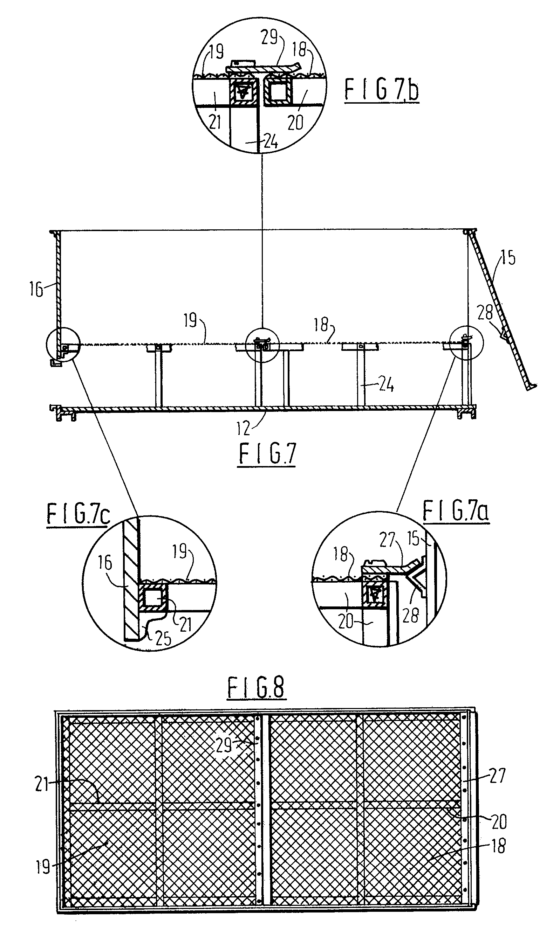

With particular reference to Figures 3 and 7-7c of the drawings, the perforated floor 17 is supported by means of support members 24 and also by brackets 25 mounted on the front wall 16 and the side walls 13, 14. In position, the perforated floor 17 generates, together with the floor 12, side walls 13, 14, the rear wall 15 and the front wall 16, a cavity 30. The cavity 30, which is in communication with the opening 23, occupies about 25-50% of the total capacity of the trailer body 10.

When drying particulate matter such as grain, it is important that any gaps between the perforated floor 17 and the trailer body walls 13-16 are sealed. With particular reference to Figure 7a of the drawings, it will be noted that the perforated floor 18 has a resilient member 27 secured therefrom so as to project rearwardly. The rear wall 15 has a projecting member 28 having a triangular cross section for enagaging with the resilient member 27. With particular reference to Figure 7b of the drawings, attached to the perforated floor 19 is a resilient member 29 which projects therefrom so as to over-ride the perforated floor 18 and provide a seal for the gap therebetween.

A dryer unit 40 is also provided. The dryer unit 40 is mounted on a tow-bar adaptor 50 and includes a chassis 41 and ground engaging wheels 42. The dryer unit 40 is of conventional design comprising a fuel tank 47; a burner unit 43; a blower fan (not shown); ducting 44; and a control panel 48. The control panel 48 includes the usual thermostat and timing controls associated with dryer units. The fan is driven by means of the power take-off of a tractor (not shown) via a chain drive (not shown) and wheels 45. The ducting 44 has an outlet 46 for engaging with the opening 23 in air tight fashion.

Because the trailer body 10 can be used as a conventional trailer body, it is desirable that the dryer unit 40 be disconnectable therefrom. The tow-bar adaptor 50 enables the dryer unit 40 to be connected to the trailer body 10 and the tractor with considerable ease.

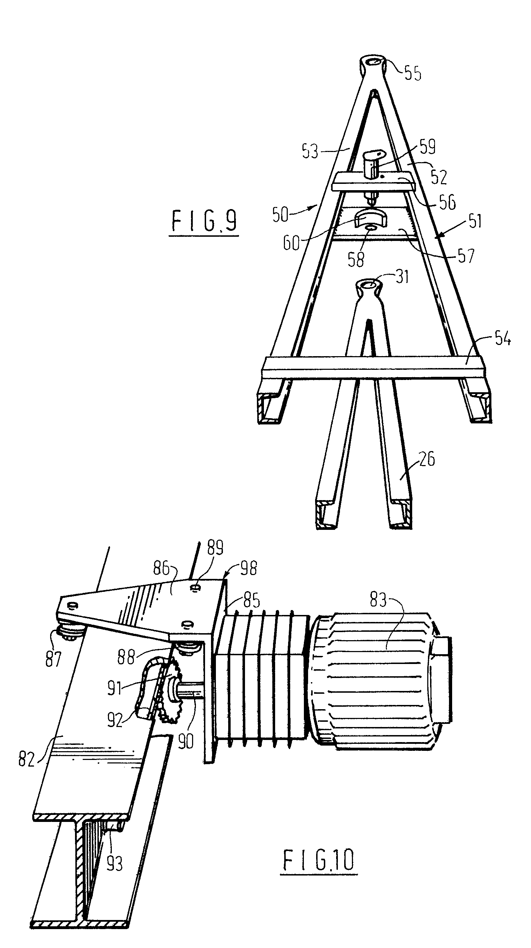

Referring now to Figure 9 of the drawings, there is shown the tow-bar adaptor 50 which comprises a triangularly shaped frame 51 which acts as the chassis 41 for the dryer unit 40. The frame 51 comprises two bars 52, 53 connected by a third bar 54 at the free ends thereof. At the apex of the bars 52, 53 is an eye 55. To enable the eye 31 of the tow-bar 26 to be connected to the tow-bar adaptor 50, a pair of plates 56, 57 is provided. Each of the plates 56, 57 has a respective hole 58 in register. Through the holes 58 may be passed a pin 59. When the tow-bar 26 is in position relative to the tow-bar adaptor 50, the holes 58 and the eye 31 will be in register to facilate the passing of the pin 59 therethrough. To facilitate the correct alignment of the tow-bar 26 in the tow-bar adaptor 50, a stop member 60 is provided on the plate 57. When the dryer unit 40 is connected to the trailer body 10, the ground enagaging wheels 42 may be elevated.

To use the trailer body 10 as a conventional trailer body, the floor 17 is removed; a plate (not shown) is placed over the opening 23; and the dryer unit 40 unhitched thereform.

To use the trailer body 10 in conjunction with the dryer unit 40, the floor 17 is inserted; the dryer unit 40 is hitched to the trailer body 10 by interengaging the tow-bar 26 with the tow-bar adapter 50 ensuring that the outlet 46 is in air-tight communication with the cavity 30. The eye 55 is hitched to the tractor; and the power take-off is connected to the blower.

A load of particulate matter is placed in the trailer body 10 for drying. The particulate matter may be grain or turf or the like. Generally speaking, it is envisaged that grain will be dried in the dryer.

The dryer unit 40 is actuated so as to blow hot air into the cavity 30 at a predetermined temperature and for a predetermined period having regard to the moisture content of the material and the required moisture content thereof. The hot air is blown through the perforations in the floor 17 and through the particulate matter so as to remove the required amount of moisutre therefrom.

At the end of the drying period, the dryer unit 40 is deactuated and the contents of the trailer body 10 removed either with an auger (not shown) or by tipping the contents out through the back thereof.

The trailer body 10 and dryer unit 40 may be transported from farmer premises to farmer premises as desired thereby enabling a multiplicity of farmers to use the dryer according to the invention. Furthermore, particulate matter in the trailer body 10 may be dried during transport thereof to a storage location such as a silo.

Some dryer units 40 requires the use of electricity at domestic voltage (110V or 220V). Dryer units of this type could not, of course, be used during transport of the grain in the absence of a suitable battery (not shown) and invertor (not shown).

It may be desirable to agitate grain when drying it using the agitator means 22.

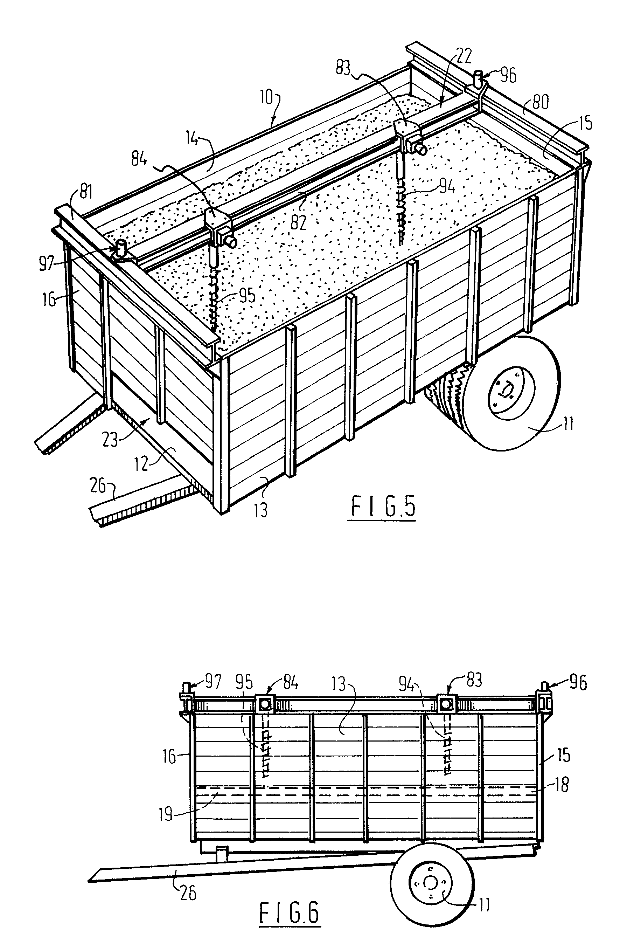

The agitator means 22 comprises a pair of I-beams 80, 81 mounted in parallel spaced apart relationship on the rear wall 15 and the front wall 16 respectively (see Figures 5 and 6 of the drawings). The mounting of the beam 80 should be such as not to interfere with the hinge mechanism for the rear wall 15. Connecting the beams 80, 81 is a third I-beam 82 which is adapted for reciprocal movement on and relative to the I-beams 80, 81. Mounted on the I-beam 82 is a pair of motors 83, 84.

With particular reference to Figure 10 of the drawings, there is shown the motor 83 mounted on an L-shaped plate 98 having sides 85, 86. The side 85 serves to support the motor 83; the side 86, which is generally of triangular shape, supports three wheels 87, 88, 89 adapted for riding on one leg of the I-beam 82.

The motor 83 has a spindle 90 terminating in a sprocket wheel 91 for interengaging with a chain 92 which runs the length of the I-beam 82 being retained thereon by conventional retainer means 93 located at each end of the I-beam 82 and at intervals therealong. The motor 83, which may be hydraulically driven from the tractor motor, also drives an auger 94. The auger 94 penetrates the particulate material in the trailer body 10.

The motor 84 is of similar construction and drives an auger 95. Accordingly, when the motors 83, 84 are actuated, the augers 94, 95 are also actuated and the sprocket wheels 91 traverse the chain 92 so as to move the motors 83, 84 in unison along the I-beam 82. The distance between the motors 83, 84 should be such that when the motor 83 is at the extremity of the I-beam 82 and beside the I-beam 80, the motor 84 is located at the mid-point of the I-beam 82 and vice-versa. The movement of the motors 83, 84 should be in the same direction. Conventional means for reversing the direction of movement of the motors 83, 84 may be employed. Accordingly, when the motor 83 reaches the I-beam 80, both motors 83, 84 will reverse direction and proceed in the direction of the I-beam 81. When the motor 84 reaches the I-beam 81, reversing of the movement of the motors 83, 84 will again occur to enable the motors 83, 84 to move in the direction of the I-beam 80. The receiprocating movement of the motors 83, 84 can continue automatically for as long as desired.

Each of the extremities of the I-beam 82 has a respective motor 96, 97 of similar construction to the motor 83 but without a respective auger. The motors 96, 97 are operated in unision so as to move the I-beam 82 in a reciprocal fashion along the I-beams 80,81 and parallel to the front wall 16.

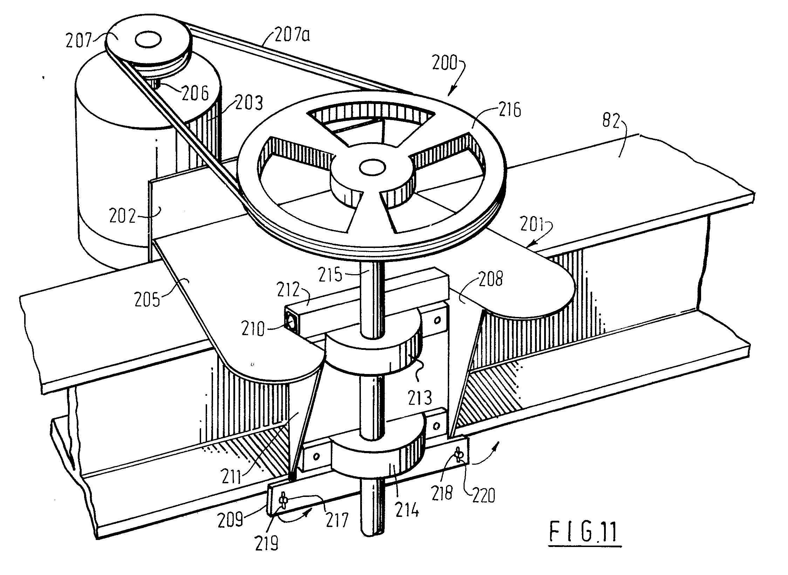

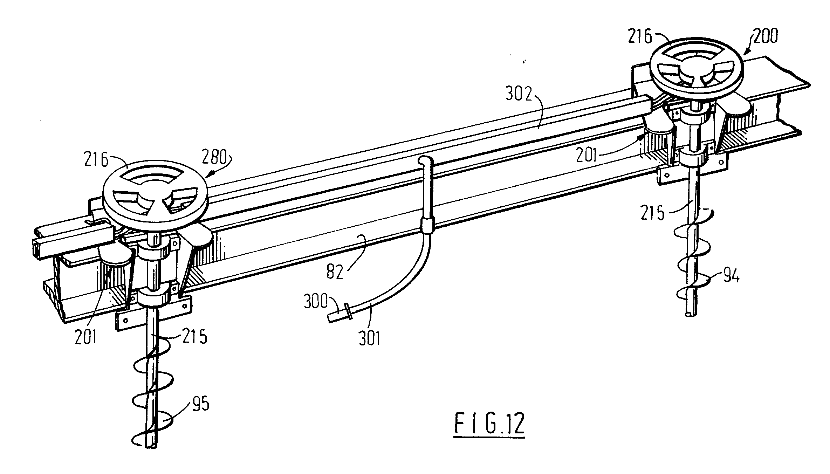

With particular reference to Figures 11 and 12 of the drawings, there is shown a second embodiment of an agitator means 200 according to the invention.

The agitator means 200 comprises a mounting member 201 having a leg 202 and a transversely disposed leg 205. The leg 202 is adapted for supporting a motor 203 having a drive spindle 206 and a drive wheel 207. The leg 205 is welded or otherwise attached to the leg 202 so as to be located above and out of contact with the I-beam 82. The leg 205 has a U-shaped cut out portion 208 from which depends a T-shaped plate 209. The leg 205 also supports a bar 210.

A hanging T-shaped plate 211 is also provided. The hanging plate 211 has a hook portion 212 for pivotal engagement with the bar 210. The plate 211 supports a pair of bearings mounted in respect of housings 213 and 214 through which bearings a spindle or axle 215 of a wheel 216 is supported for rotational movement.

The plate 209 has openings (not shown) through which the housings 213 and 214 project. The wheel 216 is connected to the wheel 207 via a drive belt 207a.

The plate 209 has a pair of holes (not shown) therein; the plate 211 also has a pair of holes 217, 218. When the plate 211 is in hanging engagement with the bar 210, the holes 217, 218 will be in register with the respective holes of the plate 209 and the plates 209, 211 may be secured together by respective pegs 219, 220.

The spindle 215 supports the auger 94. The auger 95 is supported by an agitator means 280 of similar construction to the agitator means 200 but having a motor 204 of similar construction to the motor 203.

The agitator means 200, 280 are mounted on the I-beam 82 in parallel spaced apart relationship.

The agitator means 200, 280 are adapted for movement along the I-beam 82 in a manner similar to that shown and described with respect to the motors 83, 84.

When it is desired to remove the augers 94, 95, the pegs 219, 220 are removed, the plate 211 is pivotted relative to the bar 211 so that the distance between the wheels 216 and 207 is reduced thereby enabling the belt 207a to be removed. The plate 209 with the wheel 216 and associated spindle 215 can be unhooked from and lifted clear of the bar 210.

The reverse operation is employed to mount the augers 94, 95 in place. It will be appreciated that when the pegs 218, 219 are placed in position, the correct tension on the drive belt 207a will be achieved.

It will be appreciated that in Figure 12 of the drawings, the motors 203, 204 and drive belts 215 are not shown.

In order for the augers 94, 95 to agitate all of the grain over a period of time, it is important that they follow a particular pattern of movement relative to the dimensions of the trailer body 10.

The pattern followed is determined by the velocity of the motors 83, 84 along the I-beam 82 and the velocity of the I-beam 82 along the I-beam 80. (It will be appreciated that subsequent references to the motor 83, 84 is also applicable to the motors 203, 204 respectively.)

The total area of the trailer body 10 is 2L x W where 2L is the length of the trailer body and W is the width. The auger 94, for example, is capable of covering an area L by W. With an auger diameter of D, first calculate a number R according to the formula

$$\frac{L}{\sqrt{2D}} - \frac{1}{2}$$

and a number S according to the formula

$$\frac{W}{\sqrt{2D}} - \frac{1}{2}.$$

Take the integer part of each of these numbers R and S and add 0.5 to each. Thus, if the number is 6.8, the resulting numbers R or S is 6.5; if 7.1 the resulting number R or S is 7.5.

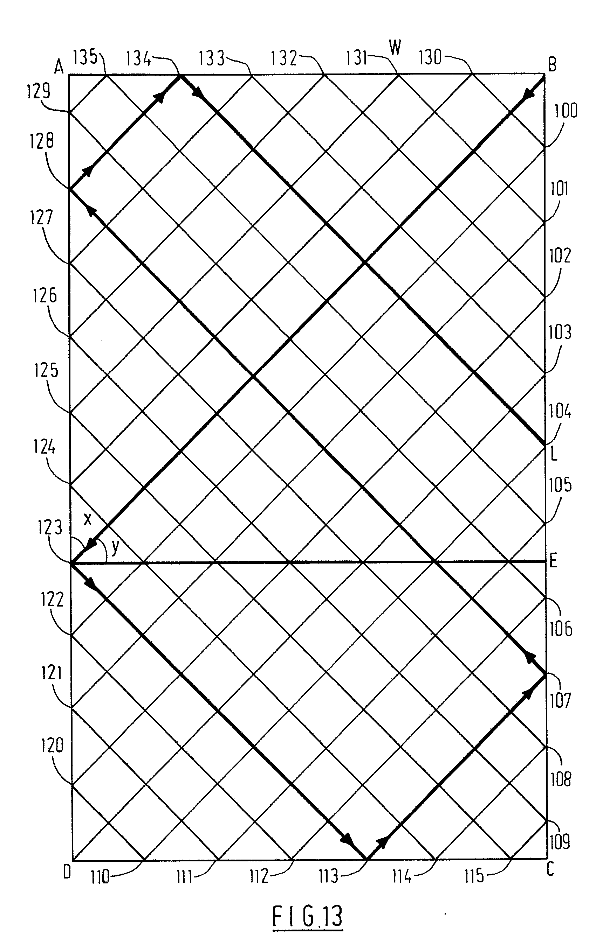

With reference to Figure 13 of the drawings which shows the area ABCD having dimensions L by W, starting at point B divide L by the number R and W by the number S so as to provide grid points 100-109 along the line BC and grid points 110-115 along the line DC. The distance between the grid points along the line BC will be equal except between the grid points 109 and C. Similarly, the distance between the grid points along the line DC will be equal except between the grid points 115 and C. Similarly the line DA is divided into grid points 120-129 and BA into grid points 130-135.

Join the grid points 115 and 109 and draw parallel lines connecting 114 with 108 etc until 129 is connected to 135. Similarly connect the grid points 130-100 and draw parallel lines connecting the grid points 131-101, 132-102 etc until grid point 120 is connected to grid point 110. This represents the desired pattern of the auger 94. A similar pattern would pertain for the auger 95.

At grid point 123, draw a line 123-E perpendicular to the line AD. Measure the angle x at B 123 A and the angle Y at B 123 E. The ratio of the angles x:y provides a ratio for the velocity of the motor 96 to the motor 84. The same velocities would apply to the motors 97 and 83 respectively.

The point B represents the start point for the motors 83 and 96. Running the motors 96, 97, 83 and 84 at velocities referred to above, the pattern shown in Figure 11 of the drawings will be generated. Thus the auger 94 will move along the lines B-123, 123-113, 113-107, 107-128, 128-134, 134-103 etc until it arrives at point D. If motors 96, 97 and 83 continue to operate, the auger 94 will move along the same pathway in the reverse direction which may not be desirable. To avoid this, an automatic trigger mechanism may be installed at D so as to turn off the motor 83 until the auger 94 reaches point C whereupon the motor 83 is switched on again. point C now becomes the start point and point A the finish point with the auger 94 tranversing the same pattern but along a different pathway. At finish point A, the motor 83 is switched off until the auger is at point B whereupon the motor 83 is again switched on and the pattern repeated again.

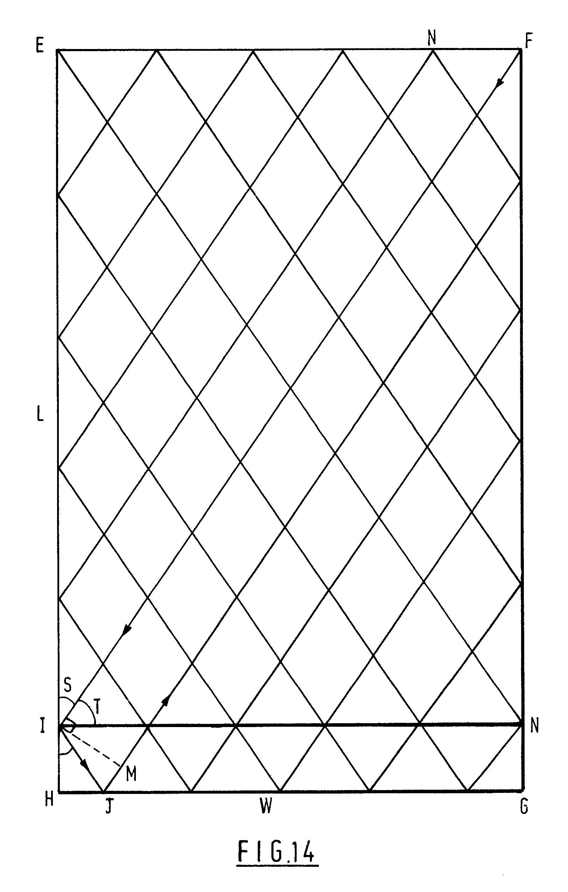

An alternative method for calculating the velocity ratios of the motors 83 and 96 may be used with reference to Figure 14 of the drawings. The area EFGH represent the area to be agitated by the auger 94. Draw a line FI and a line IJ so that the angle FIE is equal to the angle HIJ. Draw a line JK parallel to the line FI. Draw a line IM perpendicular to the line JK the distance of which line IM should be equal to the diameter of the auger 94. The required pattern of the auger 94 may be shown by drawing the line KN parallel to the line IJ and lines parallel thereto separated bY a distance equal to the diameter of the auger. Similarly, lines are drawn parallel to the lines FI. point F represents the starting point of the auger 94 and point E the finishing point.

An example of the technical details of a dryer according to the invention is as follows.

| | |
|---|---|
| Burner Size: | 146.5kW |
| Fan Delivery: | 13600m³/hour |
| Fan Pressure: | 1kPa |
| Fan Speed: | 1700 RPM |
| Trailer body Size: | 4.8m x 2.4m x 1.2m |
| Trailer body Capacity: | 10 tons |
| Capacity of Grain for Drying; | 5 tons (wheat) |
| Fuel Consumption (diesel); | 16 l/hour |
| Moisture Take Off: | 2%/hour |
| Cooling Time: | 10 - 15 Minutes |
| Electrical Power Requirements: | Single Phase 220V 350w |
| Cycle Time per Batch: | 3 Hours for 5% extraction |

An example of the power requirements and other relevant technical data associated with the drying of winter barley.

| | |
|---|---|
| Trailer contents: | 5 tons |
| Initial moisture: | 19.5% |
| Ambient temperature: | 20°C |
| Relative humidity: | 76% |
| Final moisture: | 14.3% |
| Moisture removed: | 5.2% |
| Time taken: | 2.5 hours |
| Moisture removal: | 2.08%/hour |
| Initial weight of water: | 0.95 tons |
| Final weight of water: | 0.68 tons |
| Water removed: | 0.27 tons = 5.4 cwt = 59.4 gallons |

Fuel Consumption

| | |
|---|---|
| Burner: | 39 l = 15.6 l/h |
| Tractor: | 12.9 l = 5.1 l/h |
| Total fuel: | 51.9 l for 5 tons |
| Fuel per ton: | 10.38 l for 5% removal |

Electrical Consumption

0.350kW x 2.5h = O.875kWh = 0.175kWh/ton

One of the problems with drying grain is to ensure that the temperature of the grain is controlled and maintained evenly throughout the bulk of the grain.

Again, with reference to Figure 12 of the drawings, there is provided a temperature probe 300 mounted on the end of a flexible wire or tube 301. The wire or tube 301 is attached to a link bar 302 at a point equidistant from the ends of the bar 302. The link bar 302 is attached to and connects the agitator means 200, 280. As the agitator means 200, 280 move along the I-beam 82 in tandem with each other, the temperature probe 300 is also moved progressively through the grain material.

The flexible wire or tube 301 allows for the movement of the probe 300 and also enables the probe 300 to rest near the top of the grain regardless of the height of the grain in the trailer body 10. The length of the wire or tube 301 should be such that there is no danger of entanglement with with augers 94, 95. It will be appreciated that the temperature probe may be connected to suitable monitoring means (not shown) by a cable (not shown).

Accordingly, the careful control of the temperature of the entire grain material in the trailer body may be continuously monitored by the temperature probe 300.

In the present invention, it will be appreciated the trailer body 10 and the dryer unit 40 are mounted on separate tow-bar chassis. Accordingly, when travelling over uneven terrain, the interconnection between, for example, the ducting 44 and associated outlet 46 with the opening 23 will be subject to small, rapid but significant variations in height.

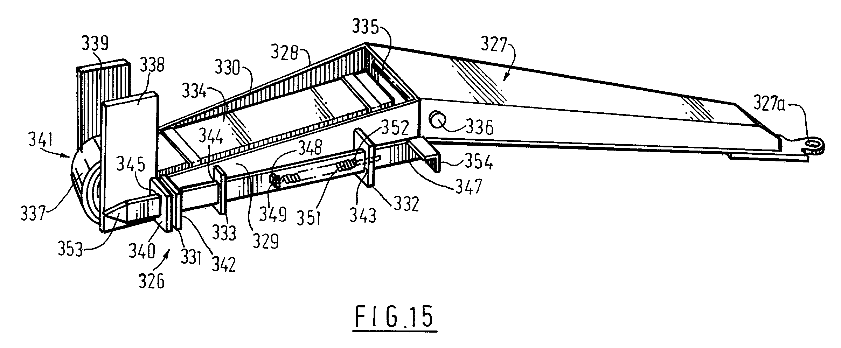

To overcome this problem, the tow-bar 26 may be replaced by a tow-bar 326 as shown in Figure 15 of the drawings.

The tow-bar 326 comprises a housing 327 having an eye 328 for use in a similar manner to the eye 31 of the tow-bar 26. The housing 327 supports a U-shaped plate 328 having legs 329, 330.

Each of the legs 329, 330 terminates in a respective flange 331 having a respective rectangularly shaped hole 342 therein. Mounted on each of the legs 329, 330 is a respective pair of brackets 332, 333 each having a respective rectangularly shaped hole 343, 344 therein.

Between the legs 329, 330 is mounted a leaf spring 334 one end of which is mounted on a bar 335 of circular cross-section. The bar 335 is pivotally supported in the housing 327 through in-register holes 336. The other end of the spring 334 terminates in a coil portion 337 mounted between plates 338, 339. The plates 338, 339 are attached to the trailer body 10 or its classes thereof.

Each of the plates 338, 339 supports a respective flange 340, 341 each having a respective rectangularly shaped hole 345 therein.

Accordingly, the combination of the housing 327 and the U-shaped plate 328 can pivotally move relative to the plates 338, 339 about the bar 335.

The holes 342-344 associated with the leg 329 together with the hole 345 of the flange 340 are in register; similarly the holes 342-344 associated with the leg 330 together with the hole 345 of the flange 341 are also in register.

With respect to the leg 329, a bar 347 is adapted for slidable engagement in the holes 342-345. One end of the bar 347 terminates in a pointed end 353; the other end of the bar terminates in a flange 354. The bar 347 has a lug 348 mounted therein which leg supports one end 349 of a coil spring 351. The other end 352 of the coil spring 351 is mounted fast to the bracket 332. Accordingly, the spring 351 tends to bias the bar 347 in the direction of the eye 328 and out of engagement with the hole 345.

A similar bar (not shown) to the bar 347 is mounted for engagement with the holes 342-345 associated with the other leg 330 and the flange 341.

By virtue of the spring 349 which biases the bars 347 out of engagement with their respective holes 345 on the flanges 340, 341, the leaf spring 334 can function in a normal fashion so as to enable the trailer body 10 to move with independent suspension relative to a tractor (not shown) towing it in the absence of the tow-bar adaptor 51.

when the tow-bar adaptor 51 is in use for enabling the dryer unit 40 to be used, and with the aid of suitable projections (not shown) mounted on the tow-bar adaptor 51, as the tow-bar adaptor 51 and the tow-bar 326 inter-engage, each of the projections of the tow-bar adaptor 51 inter-engage with respective flanges 354 so as to push respective bars 347 in a direction away from the eye 328. Each of the pointed ends 353 engages with respective holes 345 thereby preventing the pivotal movement of the leaf spring 334 and associated trailer body 10 relative to the tow-bar adaptor 51 and associated dryer unit 40.

Upon disconnection and removal of the tow-bar adaptor 51 from the tow-bar 326, disengagement of the ends 353 from their respective holes 345 takes place by virtue of the springs 351.

The invention is not limited by or to the specific embodiments described which can undergo considerable variation without departing from the scope of the invention.

## Claims

1. A dryer for grain, turf or other particulate material which dryer comprises a trailer body having ground engaging wheels, a floor, upstanding walls, and a perforated second floor; wherein the second floor is in parallel spaced-apart relationship relative to the floor and is adapted to support a load of particulate material above a cavity between the floor and the perforated floor; an air inlet means in the body for enabling air to be blown into the cavity from a dryer means; and means for attaching the body to a vehicle, such as a tractor, wherein tbe body may contain a load of particulate material which can be dried using the dryer means.

2. A dryer as claimed in Claim 1 wherein the perforated second floor is removable so that in the absence of the perforated second floor, the body may be used in the manner of a conventional trailer body.

3. A dryer as claimed in Claim 1 or Claim 2 wherein the cavity consitutes between 25-50% of the total capacity of the trailer body.

4. A dryer as claimed in any of Claims 1-3 wherein the attaching means comprises a tow-bar mounted on the trailer body and a V-shaped frame; the frame having two legs which meet at an apex; the apex having a connecting means for connecting the frame to the vehicle; the frame further comprising a first plate member located rearwardly of the apex and connecting the legs, and a second plate member located rearwardly of the apex and connecting the legs; the first plate member having a first opening; the second plate member having a second opening; said first and second plate members being in substantially parallel spaced apart relationship with said first and second holes are in register; said tow-bar having a third opening; and wherein, in use, when said first, second and third openings are in register, a releasable pin may be inserted into the in-register openings so as to secure the frame to the tow-bar.

5. A dryer as claimed in Claim 4 wherein the tow-bar comprises a housing having said third opening disposed forwardly thereof and two leg elements disposed rearwardly thereof; the said leg elements being pivotally connected at one end thereof to the housing, the other end of at least one of the leg elements terminating in a respective flange member having a first aperture; at least said one of the leg elements further comprising two outwardly disposed bracket elements in parallel spaced apart relationship; said first bracket element having a second aperture; said second bracket element having a third aperture; said first, second and third apertures being in register and having a bar element in slidable interengagement with at least said second and third apertures; means for biasing the bar forwardly; a leaf spring member disposed between the leg elements, one end of which leaf spring member is mounted to or on the housing, the other end of which leaf spring member is mounted between a first and second plate element disposed in substantially parallel spaced apart relationship which plate elements are adapted for attachment to the trailer body; at least one of said plate elements having an outwardly disposed flange element having a fourth aperture therein; the arrangement being such that in a first position of use, the said leaf spring member is operable to enable relative movement of the housing relative to the plate elements and in a second position of use, means as provided for urging the bar element rearwardly so that the bar element is in slidable interengagement with said first, second, third and fourth apertures thereby preventing movement of the housing relative to the plate elements.

6. A dryer as claimed in Claim 5 wherein the urging means is mounted on the frame so that when the tow-bar engages with the frame, the urging means automatically engages with the bar element to urge the bar element rearwardly.

7. A dryer as claimed in Claims 1-6 which further comprises means for agitating the material.

8. A dryer as claimed in Claim 7 wherein the trailer body, in plan, has a first pair of opposing sides AB, DC and a second pair of opposing sides AD, BC providing an area L x W where L is the length of the area and W is the width of the area; and wherein the sides AB, DC are notionally divided into respective first and second sets of grid reference points which points are separated from each other along each side AB, DC according to the formula (A + 0.5) where A is the integer part of a number derived from a formula

$$\frac{W}{\sqrt{2D}} - \frac{1}{2};$$

and wherein the sides AD,BC are notionally divided into respective third and fourth sets of grid reference points which points are separated from each other along each side AD, BC according to the formula (B + 0.5) where B is the integer part of a number derived from a formula

$$\frac{L}{\sqrt{2D}} - \frac{1}{2};$$

wherein two adjacent grid points on the sides BC and BD are joined to provide a first notional line; respective grid points on the side BC are joined with corresponding grid points on the side CD so as to provide a plurality of second notional lines parallel to the first notional line; two adjacent grid points on the sides AB and AD are joined to provide a second notional line; respective grid points on the side AB are joined with corresponding grid points on the side AD so as to provide a plurality of second notional lines parallel to the second notional line; said first notional line, said plurality of first notional lines, said second notional line and said plurality of second notional lines thereby providing a notional grid or pathway; and wherein the agitating means comprises an auger means and associated drive means for enabling the auger means to traverse said pathway.

9. A dryer as claimed in Claim 8 wherein the trailer body is notionally divided into two equal areas each having said first and said second pair of opposing sides and a said respective notional grid; and wherein the velocity of each drive means is in the ratio X:Y where X is the value of an angle subtended by one side of the area and a grid line which intersects said one side at an imaginary point, and Y is an angle subtended by said grid line and a line which is perpendicular to the said one side which also intersects said side at the same point.

10. A dryer as claimed in any of Claims 7-9 wherein the agitating means comprises an auger means having a spindle and an associated wheel adapted for rotation by a motor means via a removable drive belt means; wherein the motor means is mounted on a base; the spindle is mounted for rotatable movement on a plate member; the base having means for enabling the plate member to be releasably mounted thereon so that in a first position of use, the base supports the auger means for rotation by the motor means and in a second position of use, the auger means is out of engagement with the motor means.

11. A trailer for drying loads charged therein, the trailer comprising a floor for supporting said loads, through which floor air can be forced, and means for forcing air for drying the loads up through the floor.

F I G.1

F I G.2

FIG.3

FIG.4

FIG.5

FIG.6

FIG 7.b

FIG.7

FIG.7c

FIG.7a

FIG.8

F I G. 9

F I G. 10

F I G. 11

EP 0 348 238 A1

F I G.12

EP 0 348 238 A1

FIG.13

F I G.14

EP 0 348 238 A1

F I G .15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 221 985 (MARTINI)<br>* Whole document * | 1-3,11 | F 26 B 9/08<br>F 26 B 19/00<br>B 60 D 1/00 |
| Y | | 4 | |
| X | US-A-2 442 344 (CURTIS)<br>* Whole document * | 1,2,11 | |
| X | CH-A- 341 763 (WUHRMANN)<br>* Whole document * | 1,11 | |
| A | | 7 | |
| Y | US-A-3 645 560 (STEELE)<br>* Whole document * | 4 | |
| A | US-A-2 940 776 (CURTIS)<br>* Whole document * | 4 | |
| A | US-A-2 523 211 (HEDGPETH)<br>* Whole document * | 4 | |
| A | GB-A-1 103 932 (COLTON) | | |
| A | DE-A-2 923 194 (SEIBOLD) | | |
| A | DE-A-3 008 429 (FÖRTSCH) | | |

TECHNICAL FIELDS
SEARCHED (Int. Cl.4)

F 26 B
B 60 D

The present search report has been drawn up for all claims

| Place of search | Date of completion of the search | Examiner |
|---|---|---|
| THE HAGUE | 27-09-1989 | SILVIS H. |